# EUROPEAN PATENT SPECIFICATION

(11) **EP 3 870 514 B1**
(45) Date of publication and mention of the grant of the patent: **03.12.2025**
(21) Application number: 19828885.4
(22) Date of filing: 18.10.2019
(51) Int. Cl.: B65D 3/10, B65D 3/14, B65D 3/22, B65D 3/26, B65D 3/28, B65D 51/18, B65D 43/16, B65D 21/02, B29B 17/02, B29L 31/56, B29L 31/00

(54) **RECYCLABLE PAPERBOARD CONTAINER**
WIEDERVERWENDBARER PAPPBEHÄLTER
RÉCIPIENT EN CARTON RECYCLABLE

(30) Priority: 22.10.2018 WO PCT/NL2018/050696
(43) Date of publication of application: 01.09.2021
(73) Proprietor: N.V. Nutricia, 2712 HM Zoetermeer (NL)
(72) Inventor: SCHOOT UITERKAMP, Andreus Johannes Maria, 3584 CT Utrecht (NL)
(74) Representative: Nederlandsch Octrooibureau
(86) International application number: PCT/NL2019/050687
(87) International publication number: WO 2020/085898

(56) References cited:
- US-A- 4 736 870
- US-A- 5 025 981
- US-A- 5 145 065
- US-A- 5 476 213
- US-A1- 2010 252 617
- US-A1- 2014 366 490
- US-B1- 6 544 613
- PROF DR ET AL: "Institut für Aufbereitung und Recycling fester Abfallstoffe Final report Beverage carton recycling Customer: Kenniscentrum Nascheiding Dr. Ulphard Thoden van Velzen -senior packaging scientist Wageningen UR Agrotechnology and Food Innovations", DR.-ING. TH. PRETZ DIPL.-ING. O. PIKHARD AACHEN, 23 July 2010 (2010-07-23), pages 1 - 44, XP055703363, Retrieved from the Internet <URL:http://www.ddleco.nl/fileadmin/Rapporten/Endbericht_Getraenkekartonrecycling_rev._23.07.pdf> [retrieved on 20200610]
- BLEDZKI A K ET AL: "RAPID IDENTIFICATION OF PLASTICS IN RECYCLING PROCESSES", INTERNATIONAL POLYMER SCIENCE AND TECHNOLOGY, RAPRA TECHNOLOGY, SHREWABURY, GB, vol. 25, no. 4, 1 January 1998 (1998-01-01), pages T90 - T96, XP000803325, ISSN: 0307-174X

## Description

### 1. Field of the invention

The present invention relates to packages for the packaging and dispensing of products, in particular powdered products such as infant nutrition or milk formula. The invention relates in particular to constructions of such packages for the purpose of improving recycling.

### 2. Description of the related art

Powdered material, such as infant milk formula, has been sold in various forms of package for many years. Metal cans were initially the preferred container as they were relatively easy and cheap to produce and could be sealed for long term storage. The seal comprised an aluminium foil across the mouth of the container that was removed on first use. As a single container would be used for an extended period, the containers were provided with re-closable plastic lids which connected over the outer rim of the can. A measuring scoop was frequently included with the container, either packaged separately or within the can itself. Such cans are however relatively heavy and expensive to produce.

More recently, alternative packaging forms have become available which improve on the existing cans, including the Cekacan^{™} range from Å&R Carton Lund AB. These are based on plastic and foil laminate tubular container bodies and often include closures in the form of hinged lid assemblies having a facility to receive and retain a measuring scoop. One such package is described in WO 2010/123361. The container part may consist of a laminate of paperboard, metal foil and plastic material, while the lid assembly may consist of plastic. Other packages are disclosed in US 4 736 870, US 5 476 213 and US 5 025 981. The latter document describes how a cardboard sleeve of a package can be separated for the purpose of recycling.

While these materials allow the container to be produced relatively cheaply, the use of these materials in combination may be disadvantageous for recycling of the containers. In light of the above, it would be desirable to provide an improved package that at least partially overcomes some of the inconveniences of the prior art.

Other packages that are frequently encountered are the well-known brick packages such as those developed under the name TetraPak^{™}. These packages are also based on plastic, paperboard and foil laminate bodies and it has already been recognised that such laminates represent a recycling challenge. Brick packages tend to be constructed with the laminate material either connected face-to-face or overlapped. Face-to-face connection, sometimes referred to as a fin-seal, relies upon a heat-sealable layer on the innermost surfaces engaging together. Overlapped connection requires a heat-sealable layer as both the inner and outermost layers. Some packages use a mixture of both e.g. with a longitudinal seam overlapped and the ends of the package joined face-to-face. A document by Dr.-Ing. Th. Pretz et al. of 'Institut für Aufbereitung und Recycling

fester Abfailstoffe', entitled: "Beverage carton recycling", discloses how beverage cartons can be identified using near infrared (NIR) detection.

### SUMMARY OF THE INVENTION

According to the invention there is provided a package for a powdered nutritional product as claimed in claim 1. The package includes a sidewall of tubular shape having an upper end and a lower end, made from a sheet of paperboard laminate. The laminate sheet has opposed edges brought together and butt-jointed at a vertical seam and comprises at least an innermost layer of heat-sealable polymer, an oxygen barrier layer and a core layer of paperboard, the sidewall further comprising an outermost detection layer that is identifiable by near infrared radiation. The paperboard layer has a weight of between 300g/m2 and 500g/m2 and the detection layer comprises a heat-sealable polymer material having a thickness of between 10 microns and 25 microns. A base is joined to and closes the lower end of the sidewall to form a container defining a product containing space in which a quantity of the powdered nutritional product is located. The product containing space is hermetically closed prior to use by a membrane seal which is at least partially removable to gain access to the product. The package also includes a closure, sometimes referred to as a finish or 'toptainer', which may be made of plastic material. The closure has a circumferential rim connected to the upper end of the sidewall defining an access opening and a lid, pivotably attached to the rim, for selectively closing the access opening.

As a result of the proposed construction, the package may be more efficiently recycled and sorted into separate recycle streams. In particular, the plastic closure may be separated from the remainder of the package - namely the sidewall and base. This remainder, also referred to below as the container, may then be included into the 'brick' recycle stream by identification of the detection layer and/or further layers of the laminate, using near infrared (NIR) sorting technology. NIR can identify paperboard laminates but cannot usually distinguish them from (non-laminate) paper or card. By providing a detection layer that identifies the particular laminate, sorting can be facilitated. A preferred form of detection layer is a polyolefin layer such as a polyethylene (PE) layer.

In an embodiment, the closure is of plastic material and can be recycled to fabricate new products. Such a closure may be formed by injection moulding and is a relatively expensive part of the total package due to the volume of plastic used. Clean separation, in which virtually no non-plastic components are attached to the closure, would be advantageous. It would also be advantageous for recycling purposes to end up with a container without any remainders of the closure.

As the packages are often used for milk powder for babies and infants, it is very important that the packages are sealed and remain sealed before first use. For reasons of durability, safety, insect-tightness and convenient transportation, the closure may thus be very tightly adhered to the container, preferably using an adhesive. In present designs, the adhesive and mechanical connection have been optimised with these reasons in mind. As a consequence, recycling of the different components is complicated because, due to the effectiveness of the connection, they cannot easily be separated by hand. In fact existing packages are so well constructed that it is almost impossible to separate the closure and container without some form of tool. In one embodiment, the package include a separation region for facilitating the separation of the closure from the sidewall after use, the separation region comprising a point or line of weakness where separation can be initiated or facilitated by a user.

The separation region facilitates the separation of the closure and the container, as will be further explained below and is defined as the region in which the point or line of weakness is located at which separation of the closure from the container occurs. Depending upon the choice of location for the point or line of weakness, the separation region may be part of the closure, the sidewall adjacent to and below the closure or may comprise part of both the closure and the container. Similarly, the line of weakness may be formed in the circumferential rim of the plastic closure and/or the sidewall of the container located above the seal.

In this context, reference to carton is intended to denote paper or pulp based materials, sometimes referred to as cardboard, paperboard or fibreboard, for which a different recycling process is intended and/or desired than that for the plastic closure.

As the separation region comprises the point or line of weakness, it is important that this region is located above the seal that closes the container prior to use. This is of relevance since it should be ensured that the container contents remain sealed and unspoiled in a gas-tight manner. This is of particular interest where infant formula is concerned, as infants are vulnerable and, when breast feeding is not possible, may depend solely on intake of infant formula. By placing the separation region above the membrane seal, the contents of the sealed container are not jeopardized, even in case of unintended puncture or rupture of the point or line of weakness.

In the present context, the membrane seal is intended to denote a gas-tight seal, for hermetically closing the container prior to use. The contents of the package, namely the powdered nutritional product, may be packaged under a modified atmosphere e.g. with a high level of inert gas/depleted oxygen. The membrane seal is then intended to ensure the contents are kept under the modified atmosphere until the user breaks the seal, such as is the case with any infant formula.

In an embodiment, the membrane seal is made of barrier material or comprises a barrier layer that acts as a high barrier to passage of oxygen. The membrane seal may comprise an aluminium barrier layer In alternative embodiments, and in order to improve recycling, the membrane seal may be aluminium free. In the present context, aluminium fee is intended to denote that it is free of an aluminium metal layer. This does not mean that the membrane seal need be free of all aluminium, since at least aluminium oxide is known as a good barrier material, even when present in thicknesses below 1 micron. Other forms of barrier layer or layers may thus be provided, including ethylene vinyl alcohol (EVOH) and similar polymeric oxygen barriers, with or without scavengers. Alternatively, inorganic oxide layers may be used such as silicon oxide and aluminium oxide.

The membrane seal is connected to the inside of the peripheral wall, and must be at least partially removable to gain access to the product. In a preferred embodiment, the membrane seal is located below the separation region and connected to the inside of the sidewall at a distance below the upper end, such as between 15 and 50 mm or between 20 mm and 40 mm or between 25 and 35 mm. The membrane seal may be located at a distance below the upper end to allow accommodation of an infant formula dosing scoop in the void space between the closure and the membrane seal.

In an embodiment, the membrane seal is connected to the innermost layer of the sidewall by an appropriate sealing techniques, which may be e.g. heat-sealing, ultrasonic sealing or induction-sealing. It will be understood that the butt-joint construction of the sidewall is more easily joined to the membrane seal in a hermetic manner than an overlap joint. Preferably, the membrane seal is partially removable in the sense that it comprises a tear-strip configured to be torn along a tear-path and to leave a part of the seal attached to the inside of the sidewall. With this opening mechanism, a part of the membrane seal is left in the container when the tear strip is torn, and the membrane seal is therefore not completely removed when opened but only a central panel thereof to gain access to the product. For the avoidance of doubt, the opening mechanism and tear path of the membrane seal is distinct from the separation region and point/line of weakness by which the closure and container are separated.

The detection layer is any heat-sealable polymer layer that allows positive identification by appropriate sorting and separation equipment. The most widely used such equipment presently relies upon NIR detection and the detection layer is identifiable by NIR radiation. Such a layer may be referred to as a NIR detection layer. A polymer layer is used as NIR can uniquely distinguish most polymers. The detection layer may comprise the same polymer as used for conventional brick packages or may be distinct. In the latter case, the distinct layer may allow a specific treatment for the package e.g. removal and separation of the closure.

The detection layer is present as the outermost layer of the laminate. It has a thickness that is appropriate to allow its detection by suitable equipment such as NIR. In some cases, it may be necessary to detect not only the detection layer but also the underlying layer or layers, such as the paperboard layer. For this reason, a maximum thickness of the detection layer may be required. The detection layer is from 10 microns to 25 microns or around 15 microns in thickness. In other non-claimed embodiments, the detection layer may be added to the sidewall e.g. as an additional layer e.g. as a wrapper or label. A shrink fit wrapper may be contemplated or a label comprising an adhesively applied detection layer, which may overlay a paper layer.

It will be understood that for butt-jointed constructions i.e. without overlap, a polymer layer on the outermost surface is largely superfluous and in the present case is only applied for its function as a detection or identification layer. Nevertheless, this heat-sealable layer serves a double function as both a detection layer and as a heat seal layer as further described below. The heat- sealable layer may be a polyolefin, preferably polyethylene. It may be the same as the innermost layer of the laminate or may be distinct therefrom. Furthermore, although the invention is directed to butt-jointed constructions, packages constructed with overlap joined sidewalls may also benefit from the disclosed detection layer, allowing them to be separated during recycling as described further below.

With the exception of the outermost detection layer, the paperboard laminate may be of the type conventionally used for such packages. The above mentioned Cekacan^{™} range comprises a heat-sealable polyolefin layer as the innermost layer, with an aluminium barrier layer and a paperboard layer at the outside. The paperboard layer may be provided with appropriate printing and may have a varnish or gloss layer as desired. In preferred embodiments, the laminate may have a thickness of between 500 micron and 1 mm, preferably between 600 micron and 800 micron. The paperboard layer has a weight of between 300g/m2 and 500g/m2, preferably around 400 g/m2.

In an alternative embodiment and in order to improve recycling, the sidewall may be aluminium-free as defined above. In this case another form of barrier layer or layers may be provided within the laminate. Various possible layers may be contemplated, including ethylene vinyl alcohol (EVOH) and similar polymeric oxygen barriers, with or without scavengers. Alternatively, inorganic oxide layers may be used such as silicon oxide and aluminium oxide.

The base may be provided in different forms according to the intended construction. In a presently preferred embodiment the base also comprises a paperboard laminate having at least an innermost layer of heat-sealable polymer, an oxygen barrier layer and a core layer of paperboard. This allows the joint to the lower end of the sidewall to be created in a conventional manner, wherein a peripheral edge of the base is folded downwards and the innermost layer of the peripheral edge is adhered to the innermost layer of the sidewall in a face-to-face connection. The base is preferably recessed upwards with respect to the lower end of the sidewall, creating a cavity beneath the base that can be used for stacking. Such stacking is generally conventional and the upper surface of the closure may be provided with stacking arrangements that are complementary to the base. The stacking arrangements may be present on the rim or on the lid, depending on the form of the closure.

In an embodiment, the lower end of the sidewall is folded over inwards to partially cover the base. In this context, folded is intended to include both a tight fold and also a rolled edge. The rolled or folded lower end of the sidewall provides a more stable base on which the package may stand and can also facilitate stacking. It will be understood that such a rolled or folded construction may benefit from the use of a butt-joint to form the sidewall, since an overlap joint may be more difficult to fold.

In many cases, a detection layer on the sidewall may suffice for identification of the package within a recycling stream. In some cases however, it may be desirable that the base also comprises an outermost detection layer. This may further increase the accuracy of identification and separation. In an embodiment, the detection layer on the base also comprises a polyolefin and may also comprise a heat-sealable material. The base may be formed of the same laminate as the sidewall.

In the case that the outermost layer of the base is heat-sealable, the lower end of the sidewall may be folded over the peripheral edge of the base and can be adhered completely to the outermost detection layer of the peripheral edge such that no free end remains. Such a construction can be much more tightly folded than one in which no adhesion is applied to the rolled or folded lower end of the sidewall. The resulting seam has a double seal, namely a face-to-face seal between the inner layers of the base and sidewall and an overlap seal where the folded lower end of the sidewall overlaps the peripheral edge of the base and adheres to its outermost detection layer. For use in the context of infant formula, such a tight seam has considerable advantages in terms of tamper evidence. Because there is no free end of the sidewall available that is not adhered against the peripheral edge of the base, prising open of the fold or the seal is precluded. Any attempt at fraudulent access through the base of the container would be almost impossible without leaving evidence of such tampering.

The connection between the closure and the sidewall is less critical in terms of sealing or fraudulent access since it is the membrane seal that ensures hermetic closure prior to use. Nevertheless, after opening, the closure must ensure that the contents are protected and for this reason, the engagement between the closure and the sidewall must be secure and at least insect tight to 70 microns. In an embodiment, the rim has an inverted U-shaped channel engaging the upper end of the sidewall and adhesively connected thereto. In this way, adequate sealing of the container/closure interface may be achieved and/or maintained to provide a barrier to keep insects out of the container and away from the nutritional contents. In an embodiment, substantially the full interface of the sidewall and the circumferential rim of the closure is sealed using an adhesive. The adhesive is preferably applied as an uninterrupted region completely surrounding the upper end of the sidewall, such that sidewall and rim are fully sealed together and insects cannot pass through.

The container may be of any suitable shape as defined by the sidewall, which forms a tube having a given cross-sectional shape. In an embodiment, a cross-section of the sidewall, parallel to the base, has the shape of a rounded rectangle or rounded square. In other words, the sidewall can be in the form of a tube of quasi-rectangular cross section. The above-mentioned point of weakness may be arranged in a corner of the sidewall. The corner is an advantageous place to initiate a pulling force, since it is easier to separate a corner of the rim than a part located in the middle between the corners. Alternatively, the point of weakness may be located on one of the sides, e.g. centrally on one of the shorter sides of the rectangle. For display purposes, it is more advantageous that the container has the shape of a rounded rectangle as this provides more display surface to communicate with the consumer.

In an embodiment, a line of weakness is arranged in the rim of the closure, e.g. extending from the outer edge of the rim towards the access opening, and adapted to break open the rim, to facilitate separating the rim from the container. Preferably, the line of weakness is formed by a local thinning of the rim, by frangible connections and/or by a partial cut. The line of weakness may be combined with a pull-tab as described above, wherein the pull-tab is connected to the rim adjacent to the line of weakness. In this way, the pull-tab provides a good grip on the rim at the position of the line of weakness to initiate tearing at the line of weakness. In this case, the line of weakness may be located at a location on the rim having a minimum dimension. It will be understood that the rim should remain strong enough to not break during transportation.

In an embodiment, the line of weakness is arranged in the laminate material of the sidewall. In this case, the line of weakness may be formed by a partial cut of the laminate material, a line of partial perforations or a strip enclosed in the laminate material from which a grip tab visibly protrudes.

In an embodiment, the separation region comprises a tear band substantially surrounding the sidewall and/or the rim. The tear band may surround the sidewall and/or the rim completely or partially. If it surrounds the sidewall and/or the rim partially, the remaining part of the circumference may be sufficiently small such that the closure and the container can easily be manually separated when the tear band has been removed. Preferably, the tear band surrounds the sidewall and/or the rim for at least 70% of the circumference, more preferably at least 85% of the circumference or surrounds it completely.

As has been indicated above, the fact that the separation region and the line of weakness are located above the seal assures that the sealing of the package cannot be compromised due to the line of weakness. Nevertheless, during use of the package after initial opening, it is important that the line of weakness does not compromise the ability to reseal the package.

The invention further relates to a method of recycling a package after emptying of the contents as defined in the claims. The method may comprise: separating the closure from the container; disposing of the closure with plastic waste; disposing of the container into a general waste stream; identifying the detection layer using near infrared (NIR) detection: and separating the container from the general waste stream into a paperboard laminate waste stream. The method may be carried out in any particular sequence and is not limited to the sequence of steps given above.

It will be understood that the separation of the closure from the container may take place in the home. To this end, the package may include a separation region e.g. comprising a point or line of weakness, whereby a consumer may separate the closure at the point or line of weakness. The package may also be provided with a tear strip having a tab and the closure may be separated by engaging the tab to remove the tear strip. The identification and separation of the container from the general waste stream may take place at a waste treatment facility.

Alternatively, the closure may be separated at a waste facility. The closure may even be separated after the step of identifying the detection layer whereby the container and closure are subsequently disposed into their respective waste streams. The detection layer may be specific to such packages whereby an action to remove and separate the closure may be initiated once detection of the detection layer identifies the package as being of the type having a removable closure.

The invention also relates to a method of manufacturing a package as defined in the claims. The method may comprise providing a sheet of paperboard laminate material having opposed edges. The laminate may be as discussed above and hereinafter, comprising at least an innermost layer of heat-sealable polymer, an oxygen barrier layer, a core layer of paperboard and an outermost detection layer. The paperboard layer having a weight of between 300g/m2 and 500g/m2 and the detection layer comprising a heat-sealable polymer material having a thickness of between 10 microns and 25 microns. The method may further comprise rolling or curving the sheet about an axis that is parallel to the opposed edges and joining the edges together in abutting relation to form a tubular sidewall having an upper end and a lower end. In this context, parallel is understood to be 'generally parallel' and containers that are slightly conical would also fall within the scope of the invention. Thereafter, a base is provided and inserted into the tubular sidewall and a peripheral edge of the base is sealed to the sidewall adjacent to the lower end to form a product containing space. The product containing space may subsequently be filled with a quantity of powdered nutritional product including removing air from the product containing space and replacing it with a volume of inert gas. Once filled, a membrane seal may be applied above the product to seal the product and the inert gas within the product containing space. As a final step a closure is applied to the upper end of the sidewall. The closure may be of the type made of plastic material and including a circumferential rim connected to the peripheral edge and defining an access opening and a lid, pivotably attached to the rim for selectively closing the access opening.

In an embodiment, the opposed edges are joined together by a tape, heat sealed to the innermost layer of heat-sealable polymer.

In a further embodiment, the base may comprise a laminate having an innermost heat-sealable polymer layer and the base is sealed to the sidewall by folding a peripheral edge of the base downwards and heat-sealing the innermost layer of the peripheral edge to the innermost layer of the sidewall. An outermost layer of the base may further comprise a heat sealable polymer and the lower end of the sidewall may be folded over inwards to at least partially cover the peripheral edge of the base and heat-sealed to the outermost layer thereof.

### BRIEF DESCRIPTION OF THE DRAWINGS

The features and advantages of the invention will be further appreciated upon reference to the following drawings of a number of exemplary embodiments, in which:
Figure 1 shows a perspective view of a package according to the invention;
Figure 2 shows a vertical cross-section through the package of Figure 1 in the direction II-II;
Figure 2A shows a detail of the seam in Figure 2; and
Figure 3 shows a vertical cross section through the package of Figure 1 in the direction III-III.

### DESCRIPTION OF ILLUSTRATIVE EMBODIMENTS

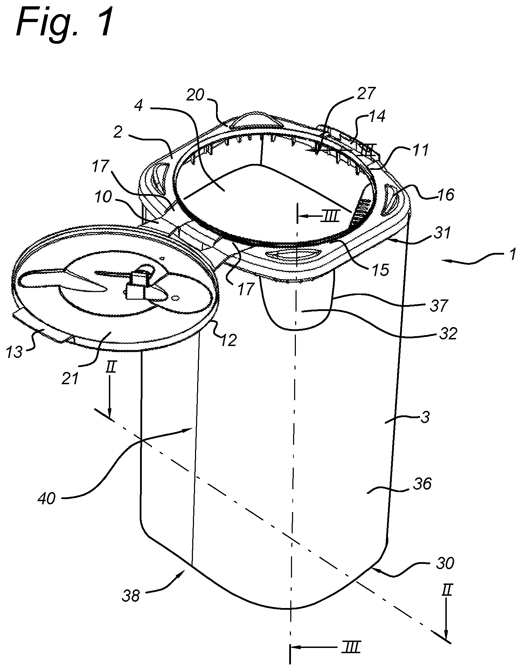

Figure 1 shows a first embodiment of a package 1 for powdered infant nutrition according to the present invention, comprising a closure 2 and a container 3. The package 1 substantially corresponds to the commercially available Easypack package in which Nutrilon^{™} infant formula is marketed by Groupe Danone.

The container 3 comprises a base 38 and a sidewall 36 extending from a lower end 30 to an upper end 31. The sidewall 36 is in the form of a quasi-rectangular tube i.e. a rectangular cross-section tube with bowed sides and rounded corners. A vertical seam 40 extends up the sidewall 36. Inside the container 3, there is provided a membrane seal 4 which separates the content of the container 3, in this case infant milk formula, from the outside. Also visible is a point of weakness 32 at one corner of the sidewall 36 below the closure 2, delimited by a line of weakness 37.

The closure 2 is a one-piece injection-moulded component, comprising a circumferential rim 20, a hinge 10 and a lid 21 and is shown with opened lid 21. Lid 21 is thus pivotably connected to rim 20. The rim 20 defines an access opening 27. In this embodiment, a first flange 11 bounds the access opening 27. Lid 21 is provided with a lid flange 12 which fits on the first flange 11 to close off access opening 27 and to hermetically seal the package 1. In this embodiment, the access opening 27 is almost elliptic. The access opening 27 can also be round or even rectangular with rounded corners. For good sealing, the lid flange 12 fits closely around the flange 11 to hermetically seal the access opening 27.

The hinge 10 has a connection part connecting to the lower end of lid flange 12. Thus, the entire lid 21 can remain accessible for engaging it for opening lid 21. Furthermore lid 21 is provided with a lip 13 for opening the lid 21. In this embodiment, the lip 13 is also provided at the lower end of lid flange 12. Here, it is provided opposite the hinge 10. Thus, a user can engage the lip 13 to open lid 21 easily. The lip 13 further provides an end rim which can be covered or shielded with a tamper evident band 14. The connection of the hinge 10 and lip 13 to the lower end of the lid flange 12 ensures that these portions lie flush with the rim 20 and do not interfere with the stacking function discussed below.

Rim 20 further comprises a top wall 15 which is provided with said access opening 27. On the top wall 15, cam elements 16 are provided. The use of such cams 16 is further explained in WO2007/142522 of the current applicant. These cams 16 provide part of stacking means for closures 2 in production. Furthermore, these cams 16 provide part of stacking means for stacking complete packages 1 for instance in stores, whereby a base 38 of a first package stacks on the rim 20 of an underlying package.

In this embodiment, the cams 16 are provided on the rim 20. An advantage of this is that the lid 21 is not loaded by the supported packages and the quality of closure is not compromised. The height of the lid 21 in closed position is equal or substantially equal to the height of the cams 16. Thus, when packages are stacked, the load of the containers will keep the lids pressed closed, while preventing loads from other directions.

It was already discussed that hinge 10 has a connection part connecting to the lower end of lid flange 12. In fact, in order to improve stacking, the connection part of hinge 10 connects below the circumferential lower end of lid flange 12 and a lowered part 17 is provided in top wall 15.

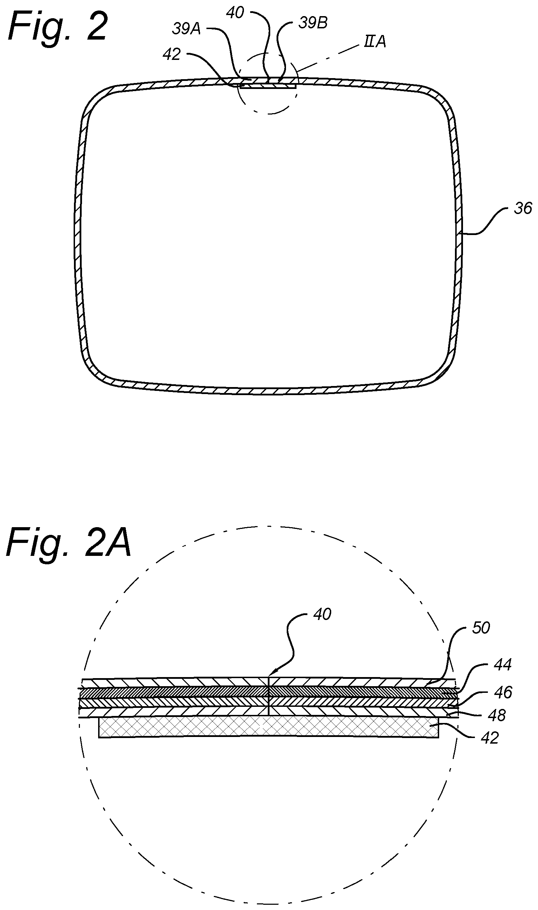

Figure 2 shows a horizontal cross-section through the package of Figure 1, taken in the direction II-II. In this view, the quasi-rectangular cross-sectional shape of the sidewall 36 can be seen. On the inner side of the container 3, covering the vertical seam 40 there is a tape 42.

Figure 2A shows a detail of the sidewall 36 at the vertical seam 40, where opposed edges 39A, B of the sidewall are brought together in abutting relation. The sidewall 36 is made of a laminate comprising a number of layers. The thickest layer is a core layer 44 of paperboard. To the inside of the core layer 44 is a barrier layer 46 of aluminium and an innermost heat-seal layer 48 of polyethylene (LDPE). Outside the core layer 44 is an outermost detection layer 50, also of polyethylene. It will be understood that other layers or sub-layers such as tie layers, adhesive layers and printing and varnish layers may be present. The thickness of the sidewall 36 is about 700 microns and has a weight of between 250 g/m² and 500 g/m². The tape 42 covers the vertical seam 40 and keeps the opposed edges 39 A, B together. The tape 42 is generally conventional and comprises a laminate of OPET and aluminium with heat sealable LDPE on both surfaces. In the case that the sidewall is formed of an aluminium-free laminate, the tape 42 may also be provided with an alternative aluminium-free barrier layer.

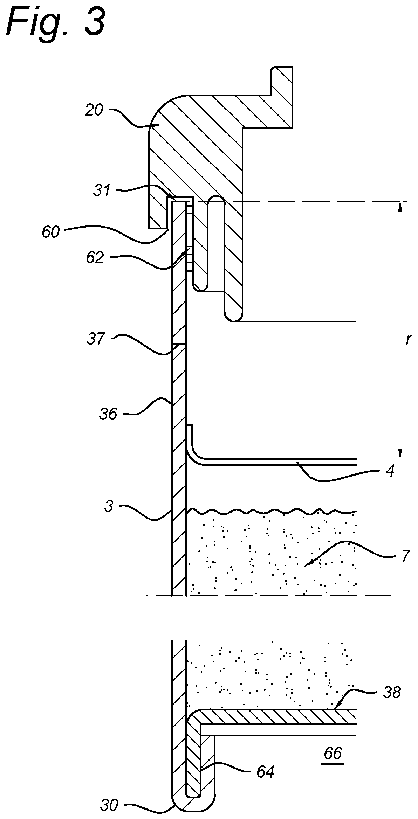

Figure 3 shows a vertical cross-section through the package of Figure 1, taken in the direction III-III through a corner of the package. In this view, the construction of the rim 20 and the base 38 and their connection to the sidewall 36 can better be seen.

The rim 20 rim has an inverted U-shaped channel 60 that closely fits over the upper end 31 of the sidewall 36. The rim 20 and sidewall 36 are glued together using an adhesive 62 provided in the channel 60. The point of weakness 32 in the sidewall 36 is defined by the portion of the sidewall 36 above the line of weakness 37. This line of weakness 37 is a partial perforation through the sidewall 36. As can be seen in this view, the line of weakness 37 is provided in what may be referred to as the headspace of the container 3 between the membrane seal 4 and the upper end 31.

The point of weakness 32 also provides a gripping region by which a user can grip beneath the closure 2 in order to break the tight connection between the closure 2 and the container 3. The point of weakness 32 is provided in a corner of the sidewall 36 just below the rim 20, such that it can conveniently be pressed inwards to allow placement of a thumb. Subsequently, the closure 2 can be torn from the container 3 in order to allow separated recycling after use.

The base 38 of the container 3 is also made of the same laminate as the sidewall 36. It has a peripheral edge 64 that is folded downwards and that is heat sealed in a face-to-face seal to the innermost layer of the sidewall 36 adjacent to the lowed end 30. The lower end 30 is folded inwards over the peripheral edge 64 of the base 38 and sealed to the outermost layer thereof in an overlap seal. Since the entire surface area of the inwardly folded lower end 30 is sealed to the outermost layer of the base 38, no free end is visible at which unauthorised tampering could take place. In particular, the lower end 30 of the sidewall 36 faces towards the base 38 preventing insertion of a sharp object. The resulting seam is both sturdy and secure against tampering. The base 38 is recessed upwards with respect to the lower end 30 of the sidewall 36, creating a cavity 66 beneath the base 38. The cavity 66 is sized to fit over the cams 16 on the closure 2, allowing stable stacking of packages 1.

The illustrated package 1 is designed to contain 800 grams of powdered infant formula. It will be understood that such packages may alternatively contain between 100 and 2000 grams, preferably between 300 and 1200 grams, most preferably either about 450 grams or about 900 grams.

The sidewall 36 of the container 3 is provided with information leading the user to use the point of weakness 32 properly for separation of the closure 2 and the container 3 and providing additional information relating to correct recycling.

The invention has been described by reference to certain embodiments discussed above. It will be recognized that these embodiments are susceptible to various modifications and alternative forms well known to those of skill in the art. In particular, both the hinges and the container may be distinct from the schematically illustrated design.

## Claims

1. A package (1) for a powdered nutritional product comprising:
a sidewall (36) of tubular shape, having an upper end (31) and a lower end (30), the sidewall comprising a sheet of paperboard laminate (44,46,48) with opposed edges brought together and butt-jointed at a vertical seam (40), wherein the laminate comprises at least an innermost layer of heat-sealable polymer (48), an oxygen barrier layer (46), a core layer (44) of paperboard;
a base (38), joined to and closing the lower end of the sidewall to define a product containing space;
a quantity of the powdered nutritional product located in the product containing space;
a membrane seal (4), for closing the product containing space prior to use and being at least partially removable to gain access to the product; and
a closure (2), made of plastic material, including a circumferential rim (20) connected to the upper end of the sidewall and defining an access opening (27) and a lid (21), pivotably attached to the rim, for selectively closing the access opening;
**characterised in that** the paperboard layer has a weight of between 300g/m2 and 500g/m2 and the laminate further comprise an outermost detection layer (50) of a heat-sealable polymer material having a thickness of between 10 microns and 25 microns.

2. The package (1) according to claim 1, comprising a separation region for facilitating the separation of the closure from the sidewall after use, the separation region comprising a point (32) or line (37) of weakness where separation can be initiated or facilitated by a user.

3. The package (1) according to claim 1 or claim 2, wherein the membrane seal (4) is attached to the sidewall (36) below the closure (2), adjacent to the upper end (31).

4. The package (1) according to any one of the preceding claims, wherein the detection layer (50) comprises polyethylene and more particularly LDPE.

5. The package (1) according to any one of the preceding claims, wherein the detection layer (50) has a thickness of around 15 microns.

6. The package (1) according to any one of the preceding claims, wherein the base (38) comprises a paperboard laminate comprising at least an innermost layer of heat-sealable polymer, an oxygen barrier layer and a core layer of paperboard, wherein optionally, a peripheral edge (64) of the base (38) is folded downwards and the innermost layer of the peripheral edge is adhered to the innermost layer of the sidewall and wherein the lower end (30) of the sidewall (36) is folded over inwards to partially cover the base (38).

7. The package (1) according to claim 6, wherein the base (38) also comprises an outermost detection layer and/or sealing layer and the lower end (30) of the sidewall (36) is optionally sealed to the outermost layer of the peripheral edge (64) in an overlap seal.

8. The package (1) according to any one of the preceding claims, wherein the rim (20) has an inverted U-shaped channel engaging the upper end (31) of the sidewall (36) and adhesively connected thereto.

9. The package (1) according to any one of the preceding claims, wherein the sidewall (36) and/or the membrane seal (4) is aluminium-free and/or the barrier layer (46) comprises a polymeric layer or an oxide layer.

10. A method of recycling a package (1) for a powdered nutritional product, after emptying of the contents, the package comprising a container (3) of paperboard laminate material and a plastic closure (2), the container having a sidewall (36) of tubular shape, having an upper end (31) and a lower end (30), the laminate material comprising at least an innermost layer of heat-sealable polymer (48), an oxygen barrier layer (46) and a core layer (44) of paperboard, the paperboard layer having a weight of between 300g/m2 and 500g/m2, the plastic closure including a circumferential rim (20) connected to the upper end of the sidewall and defining an access opening (27) and a lid (21), pivotably attached to the rim, for selectively closing the access opening, the sidewall further comprising an outermost detection layer (50) of the laminate, comprising a heat-sealable polymer material that is identifiable by near infrared detection and has a thickness of between 10 microns and 25 microns, the method comprising:
separating the closure from the container;
disposing of the closure with plastic waste;
disposing of the container into a general waste stream;
identifying the detection layer using near infrared (NIR) detection: and
separating the container from the general waste stream into a paperboard laminate waste stream.

11. The method of claim 10, wherein the package is a package according to any of claims 1 to 9.

12. A method of manufacturing a package (1) for a powdered nutritional product, comprising
providing a sheet of paperboard laminate material having opposed edges, wherein the laminate comprises at least an innermost layer of heat-sealable polymer (48), an oxygen barrier layer (46) and a core layer (44) of paperboard, the paperboard layer having a weight of between 300g/m2 and 500g/m2, the sheet further comprising an outermost detection layer (50) comprising a heat-sealable polymer material and having a thickness of between 10 microns and 25 microns;
rolling the sheet about an axis that is parallel to the opposed edges and joining the edges together in abutting relation to form a tubular sidewall (36) having an upper end (31) and a lower end (30);
providing a base (38) and inserting the base into the tubular sidewall;
sealing a peripheral edge (64) of the base to the sidewall adjacent to the lower end to form a product containing space;
filling the product containing space with a quantity of powdered nutritional product;
removing air from the product containing space and replacing it with a volume of inert gas;
applying a membrane seal (4) above the product to seal the product and the inert gas within the product containing space; and
applying a closure (2) to the upper end of the sidewall, the closure including a circumferential rim (20) connected to the upper end (31) and defining an access opening (27) and a lid (21), pivotably attached to the rim for selectively closing the access opening.

13. The method according to claim 12, wherein the opposed edges are joined together by a tape (42), heat sealed to the innermost layer (44) of heat-sealable polymer.

14. The method according to claim 12 or claim 13, wherein the base (38) comprises a laminate having an innermost heat-sealable polymer layer and the base is sealed to the sidewall (36) by folding the peripheral edge (64) of the base downwards and heat-sealing the innermost layer of the peripheral edge to the innermost layer of the sidewall and an outermost layer of the base optionally comprises a heat sealable polymer whereby the lower end of the sidewall is folded over inwards to at least partially cover the peripheral edge of the base and heat-sealed to the outermost layer thereof.

15. The package (1) of any of claims 1 to 9 or the method according to any of claims 10 to 14, wherein the powdered nutritional product is infant formula.

## Patentansprüche

1. Verpackung (1) für ein pulverförmiges Nahrungsmittelprodukt, umfassend:
eine Seitenwand (36) in röhrenförmiger Form mit einem oberen Ende (31) und einem unteren Ende (30), wobei die Seitenwand einen Bogen Kartonlaminat (44, 46, 48) mit gegenüberliegenden Kanten umfasst, die an einer vertikalen Naht (40) zusammengeführt und stoßverbunden sind, wobei das Laminat mindestens eine innerste Schicht aus heißsiegelbarem Polymer (48), eine Sauerstoffsperrschicht (46), eine Kernschicht (44) aus Karton umfasst;
eine Basis (38), die mit dem unteren Ende der Seitenwand verbunden ist und dieses verschließt, um einen Produkt enthaltenden Raum zu begrenzen;
eine Menge des pulverförmigen Nahrungsmittelprodukts, das sich in dem Produkt enthaltenden Raum befindet;
eine Membranversiegelung (4) zum Verschließen des Produkt enthaltenden Raums vor der Verwendung, und die zum Erhalten von Zugang zu dem Produkt zumindest teilweise entfernbar ist; und
einen aus Kunststoffmaterial hergestellten Verschluss (2), der einen umlaufenden Rand (20), der mit dem oberen Ende der Seitenwand verbunden ist und eine Zugangsöffnung (27) begrenzt, und einen Deckel (21), der schwenkbar an dem Rand befestigt ist, um die Zugangsöffnung wahlweise zu verschließen, einschließt;
**dadurch gekennzeichnet, dass** die Kartonschicht ein Gewicht zwischen 300 g/m2 und 500 g/m2 aufweist und das Laminat weiter eine äußerste Detektionsschicht (50) aus einem heißsiegelbaren Polymermaterial mit einer Dicke zwischen 10 Mikrometern und 25 Mikrometern umfasst.

2. Verpackung (1) nach Anspruch 1, umfassend einen Trennbereich zum Erleichtern des Trennens des Verschlusses von der Seitenwand nach Gebrauch, wobei der Trennbereich einen Schwächungspunkt (32) oder eine Schwächungslinie (37) umfasst, an dem bzw. der das Trennen durch einen Benutzer initiiert oder erleichtert werden kann.

3. Verpackung (1) nach Anspruch 1 oder Anspruch 2, wobei die Membranversiegelung (4) an der Seitenwand (36) unterhalb des Verschlusses (2) angrenzend an das obere Ende (31) angebracht ist.

4. Verpackung (1) nach einem der voranstehenden Ansprüche, wobei die Detektionsschicht (50) Polyethylen und insbesondere LDPE umfasst.

5. Verpackung (1) nach einem der voranstehenden Ansprüche, wobei die Detektionsschicht (50) eine Dicke von etwa 15 Mikrometern aufweist.

6. Verpackung (1) nach einem der voranstehenden Ansprüche, wobei die Basis (38) ein Kartonlaminat umfasst, das mindestens eine innerste Schicht aus heißsiegelbarem Polymer, eine Sauerstoffsperrschicht und eine Kernschicht aus Karton umfasst, wobei optional eine Umfangskante (64) der Basis (38) nach unten geknickt ist und die innerste Schicht der Umfangskante mit der innersten Schicht der Seitenwand verklebt ist und wobei das untere Ende (30) der Seitenwand (36) nach innen umgeschlagen ist, um die Basis (38) teilweise zu bedecken.

7. Verpackung (1) nach Anspruch 6, wobei die Basis (38) auch eine äußerste Detektionsschicht und/oder Versiegelungsschicht umfasst und das untere Ende (30) der Seitenwand (36) optional mit der äußersten Schicht der Umfangskante (64) in einer Überlappungsversiegelung versiegelt ist.

8. Verpackung (1) nach einem der voranstehenden Ansprüche, wobei der Rand (20) einen umgekehrt U-förmigen Kanal aufweist, der an das obere Ende (31) der Seitenwand (36) greift und mit dieser verklebt ist.

9. Verpackung (1) nach einem der voranstehenden Ansprüche, wobei die Seitenwand (36) und/oder die Membranversiegelung (4) aluminiumfrei ist und/oder die Sperrschicht (46) eine Polymerschicht oder eine Oxidschicht umfasst.

10. Verfahren zur Wiederverwertung einer Verpackung (1) für ein pulverförmiges Nahrungsmittelprodukt nach dem Entleeren des Inhalts, wobei die Verpackung einen Behälter (3) aus Kartonlaminatmaterial und einen Kunststoffverschluss (2) umfasst, wobei der Behälter eine Seitenwand (36) mit röhrenförmiger Form aufweist, ein oberes Ende (31) und ein unteres Ende (30) aufweist, wobei das Laminatmaterial mindestens eine innerste Schicht aus heißsiegelbarem Polymer (48), eine Sauerstoffsperrschicht (46) und eine Kernschicht (44) aus Karton umfasst, wobei die Kartonschicht ein Gewicht zwischen 300 g/m2 und 500 g/m2 aufweist, wobei der Kunststoffverschluss einen umlaufenden Rand (20), der mit dem oberen Ende der Seitenwand verbunden ist und eine Zugangsöffnung (27) begrenzt, und einen Deckel (21), der schwenkbar an dem Rand befestigt ist, um die Zugangsöffnung wahlweise zu verschließen, einschließt, wobei die Seitenwand weiter eine äußerste Detektionsschicht (50) des Laminats umfasst, die ein heißsiegelbares Polymermaterial umfasst, das durch Nahinfrarotdetektion identifizierbar ist und eine Dicke zwischen 10 Mikrometern und 25 Mikrometern aufweist, wobei das Verfahren Folgendes umfasst:
das Trennen des Verschlusses von dem Behälter;
das Entsorgen des Verschlusses mit Kunststoffabfällen;
das Entsorgen des Behälters in einem allgemeinen Abfallstrom;
das Identifizieren der Detektionsschicht mittels Nahinfrarotdetektion (NIR); und
das Trennen des Behälters aus dem allgemeinen Abfallstrom in einen Kartonlaminat-Abfallstrom.

11. Verfahren nach Anspruch 10, wobei die Verpackung eine Verpackung gemäß einem der Ansprüche 1 bis 9 ist.

12. Verfahren zur Herstellung einer Verpackung (1) für ein pulverförmiges Nahrungsmittelprodukt, umfassend
das Bereitstellen eines Bogens aus laminiertem Kartonmaterial mit gegenüberliegenden Kanten, wobei das Laminat mindestens eine innerste Schicht aus heißsiegelbarem Polymer (48), eine Sauerstoffsperrschicht (46) und eine Kernschicht (44) aus Karton umfasst, wobei die Kartonschicht ein Gewicht zwischen 300 g/m2 und 500 g/m2 aufweist, wobei der Bogen weiter eine äußerste Detektionsschicht (50) umfasst, die ein heißsiegel-bares Polymermaterial umfasst und eine Dicke zwischen 10 Mikrometern und 25 Mikrometern aufweist;
Rollen des Bogens um eine Achse, die parallel zu den gegenüberliegenden Kanten verläuft, und Verbinden der Kanten in aneinanderstoßender Beziehung, um eine röhrenförmige Seitenwand (36) mit einem oberen Ende (31) und einem unteren Ende (30) zu bilden;
Bereitstellen einer Basis (38) und Einführen der Basis in die röhrenförmige Seitenwand;
Versiegeln einer Umfangskante (64) der Basis an der Seitenwand angrenzend an das untere Ende, um einen Produkt enthaltenden Raum zu bilden;
Füllen des Produkt enthaltenden Raums mit einer Menge eines pulverförmigen Nahrungsmittelprodukts;
Entfernen von Luft aus dem Produkt enthaltenden Raum und Ersetzen derselben durch ein Volumen eines Inertgases;
Anbringen einer Membranversiegelung (4) über dem Produkt, um das Produkt und das Inertgas innerhalb des Produkt enthaltenden Raums zu versiegeln; und
Anbringen eines Verschlusses (2) an dem oberen Ende der Seitenwand, wobei der Verschluss einen umlaufenden Rand (20), der mit dem oberen Ende (31) verbunden ist und eine Zugangsöffnung (27) begrenzt, und einen Deckel (21), der schwenkbar an dem Rand angebracht ist, um die Zugangsöffnung selektiv zu verschließen, einschließt.

13. Verfahren nach Anspruch 12, wobei die gegenüberliegenden Kanten durch ein Band (42) miteinander verbunden sind, das mit der innersten Schicht (44) aus heißsiegelbarem Polymer heißversiegelt ist.

14. Verfahren nach Anspruch 12 oder Anspruch 13, wobei die Basis (38) ein Laminat mit einer innersten heißsiegelbaren Polymerschicht umfasst und die Basis mit der Seitenwand (36) durch Umknicken der Umfangskante (64) der Basis nach unten und Heißsiegeln der innersten Schicht der Umfangskante mit der innersten Schicht der Seitenwand versiegelt wird und eine äußerste Schicht der Basis optional ein heißsiegelbares Polymer umfasst, wodurch das untere Ende der Seitenwand nach innen umgefaltet wird, um die Umfangskante der Basis zumindest teilweise zu bedecken, und mit der äußersten Schicht derselben heißversiegelt wird.

15. Verpackung (1) nach einem der Ansprüche 1 bis 9 oder Verfahren nach einem der Ansprüche 10 bis 14, wobei das pulverförmige Nahrungsmittelprodukt Säuglingsanfangsnahrung ist.

## Revendications

1. Emballage (1) pour un produit nutritionnel en poudre, comprenant :
une paroi latérale (36) de forme tubulaire, ayant une extrémité supérieure (31) et une extrémité inférieure (30), la paroi latérale comprenant une feuille de stratifié en carton (44, 46, 48) dont les bords opposés sont rapprochés et joints bout à bout au niveau d'une couture verticale (40), où le stratifié comprend au moins une couche la plus interne en polymère thermoscellable (48), une couche barrière à l'oxygène (46) et une couche centrale (44) en carton ;
une base (38), reliée à l'extrémité inférieure de la paroi latérale et fermant celle-ci pour définir un espace-produit ;
une quantité du produit nutritionnel en poudre située dans l'espace-produit ;
une membrane d'étanchéité (4), destinée à fermer l'espace-produit avant utilisation et pouvant être au moins partiellement retirée pour accéder au produit; et
une fermeture (2) faite en matière plastique, incluant un rebord circonférentiel (20) relié à l'extrémité supérieure de la paroi latérale et définissant une ouverture d'accès (27) et un couvercle (21), fixé de manière pivotante au rebord, pour fermer sélectivement l'ouverture d'accès ;
**caractérisé en ce que** la couche en carton a un poids compris entre 300 g/m² et 500 g/m² et le stratifié comprend en outre une couche de détection la plus externe (50) en un matériau polymère thermoscellable ayant une épaisseur comprise entre 10 microns et 25 microns.

2. Emballage (1) selon la revendication 1, comprenant une zone de séparation pour faciliter la séparation de la fermeture de la paroi latérale après utilisation, la zone de séparation comprenant un point (32) ou une ligne (37) de faiblesse où une séparation peut être initiée ou facilitée par un utilisateur.

3. Emballage (1) selon la revendication 1 ou la revendication 2, où la membrane d'étanchéité (4) est fixée à la paroi latérale (36) sous la fermeture (2), adjacente à l'extrémité supérieure (31).

4. Emballage (1) selon l'une quelconque des revendications précédentes, où la couche de détection (50) comprend du polyéthylène et plus particulièrement du PEBD.

5. Emballage (1) selon l'une quelconque des revendications précédentes, où la couche de détection (50) a une épaisseur d'environ 15 microns.

6. Emballage (1) selon l'une quelconque des revendications précédentes, où la base (38) comprend un stratifié en carton comprenant au moins une couche la plus interne de polymère thermoscellable, une couche barrière à l'oxygène et une couche centrale en carton, où, éventuellement, un bord périphérique (64) de la base (38) est replié vers le bas et la couche la plus interne du bord périphérique est collée à la couche la plus interne de la paroi latérale, et où l'extrémité inférieure (30) de la paroi latérale (36) est repliée vers l'intérieur pour recouvrir partiellement la base (38).

7. Emballage (1) selon la revendication 6, où la base (38) comprend également une couche de détection la plus externe et/ou une couche de scellage et l'extrémité inférieure (30) de la paroi latérale (36) est éventuellement scellée à la couche la plus externe du bord périphérique (64) dans une soudure par chevauchement.

8. Emballage (1) selon l'une quelconque des revendications précédentes, où le rebord (20) comporte un canal en forme de U inversé s'engageant avec l'extrémité supérieure (31) de la paroi latérale (36) et relié à celle-ci par adhésif.

9. Emballage (1) selon l'une quelconque des revendications précédentes, où la paroi latérale (36) et/ou la membrane d'étanchéité (4) sont exemptes d'aluminium et/ou la couche barrière (46) comprend une couche polymère ou une couche d'oxyde.

10. Procédé de recyclage d'un emballage (1) pour un produit nutritionnel en poudre, après vidage des contenus, l'emballage comprenant un récipient (3) en matériau stratifié en carton et une fermeture en plastique (2), le récipient ayant une paroi latérale (36) de forme tubulaire, ayant une extrémité supérieure (31) et une extrémité inférieure (30), le matériau stratifié comprenant au moins une couche la plus interne de polymère thermoscellable (48), une couche barrière à l'oxygène (46) et une couche centrale (44) en carton, la couche en carton ayant un poids compris entre 300 g/m² et 500 g/m², la fermeture en plastique incluant un rebord circonférentiel (20) relié à l'extrémité supérieure de la paroi latérale et définissant une ouverture d'accès (27) et un couvercle (21), fixé de manière pivotante au rebord, pour fermer sélectivement l'ouverture d'accès, la paroi latérale comprenant en outre une couche de détection la plus externe (50) du stratifié, comprenant un matériau polymère thermoscellable qui est identifiable par détection proche infrarouge et a une épaisseur comprise entre 10 microns et 25 microns, le procédé comprenant :
séparer la fermeture du récipient ;
jeter la fermeture avec les déchets plastiques ;
jeter le récipient dans un flux général des déchets ;
identifier la couche de détection à l'aide d'une détection proche infrarouge (NIR) : et
séparer le récipient du flux général des déchets pour le diriger vers un flux des déchets de stratifié en carton.

11. Procédé selon la revendication 10, où l'emballage est un emballage selon l'une quelconque des revendications 1 à 9.

12. Procédé de fabrication d'un emballage (1) pour un produit nutritionnel en poudre, comprenant
fournir une feuille de matériau stratifié en carton ayant des bords opposés, où le stratifié comprend au moins une couche la plus interne de polymère thermoscellable (48), une couche barrière à l'oxygène (46) et une couche centrale (44) en carton, la couche en carton ayant un poids compris entre 300 g/m² et 500 g/m², la feuille comprenant en outre une couche de détection la plus externe (50) comprenant un matériau polymère thermoscellable et ayant une épaisseur comprise entre 10 microns et 25 microns ;
enrouler la feuille autour d'un axe qui est parallèle aux bords opposés et joindre les bords ensemble bout à bout pour former une paroi latérale tubulaire (36) ayant une extrémité supérieure (31) et une extrémité inférieure (30) ;
fournir une base (38) et insérer la base dans la paroi latérale tubulaire ;
sceller un bord périphérique (64) de la base à la paroi latérale adjacente à l'extrémité inférieure pour former un espace-produit ;
remplir l'espace-produit avec une quantité de produit nutritionnel en poudre ;
évacuer l'air de l'espace-produit et le remplacer par un volume de gaz inerte ;
appliquer une membrane d'étanchéité (4) au-dessus du produit pour sceller le produit et le gaz inerte à l'intérieur de l'espace-produit ; et
appliquer une fermeture (2) à l'extrémité supérieure de la paroi latérale, la fermeture incluant un rebord circonférentiel (20) relié à l'extrémité supérieure (31) et définissant une ouverture d'accès (27) et un couvercle (21), fixé de manière pivotante au rebord pour fermer sélectivement l'ouverture d'accès.

13. Procédé selon la revendication 12, où les bords opposés sont joints ensemble par un ruban adhésif (42), thermoscellé à la couche la plus interne (44) de polymère thermoscellable.

14. Procédé selon la revendication 12 ou la revendication 13, où la base (38) comprend un stratifié comportant une couche de polymère thermoscellable la plus interne et la base est scellée à la paroi latérale (36) en repliant le bord périphérique (64) de la base vers le bas et en thermoscellant la couche la plus interne du bord périphérique à la couche la plus interne de la paroi latérale, et une couche la plus externe de la base comprend éventuellement un polymère thermoscellable, de sorte que l'extrémité inférieure de la paroi latérale est repliée vers l'intérieur pour recouvrir au moins partiellement le bord périphérique de la base et est thermoscellée à la couche la plus externe de celle-ci.

15. Emballage (1) selon l'une quelconque des revendications 1 à 9 ou le procédé selon l'une quelconque des revendications 10 à 14, où le produit nutritionnel en poudre est une préparation pour nourrissons.
